# EUROPEAN PATENT APPLICATION

(11) **EP 4 653 183 A2**
(43) Date of publication of application: **26.11.2025**
(21) Application number: 25199056.0
(22) Date of filing: 13.12.2023
(51) Int. Cl.: B29D 99/00

(54) **METHODS FOR MANUFACTURING HAT-STIFFENED STRUCTURES**

(30) Priority: 13.12.2022 US 202218065458; 26.04.2023 US 202363498330 P; 25.09.2023 US 202318473836
(62) Divisional of application: 23216216.4
(71) Applicant: The Boeing Company, Arlington, VA 22202 (US)
(72) Inventor: TSOTSIS, Thomas Karl, Arlington, 22202 (US); HARBER, Andrew Milton, Arlington, 22202 (US)
(74) Representative: Morrall, Jonathan Ian McLachlan

(57) **Abstract**

Stiffened composite skin and methods of manufacture. A dry, hat-shaped preform is applied into a recess in a lower mold tool. A first set of dry, skin-preform layers is applied over the dry, hat-shaped preform to form a dry preform assembly. Resin is infused into the dry preform assembly to form a resin-infused preform. The resin-infused preform is cured *in situ* to form the stiffened composite skin.

## Description

### BACKGROUND INFORMATION

### 1. Field:

The present disclosure relates generally to composite structures and more specifically to manufacturing stiffened composite structures.

### 2. Background:

Aircraft are being designed and manufactured with greater and greater percentages of composite materials. Composite materials are used in aircraft to decrease the weight of the aircraft. This decreased weight improves performance features such as payload capacities and fuel efficiencies. Further, composite materials provide longer service life for various components in an aircraft.

Composite materials are strong, lightweight materials created by combining two or more constituent materials. For example, a composite material may include reinforcing fibers bound in polymer-resin matrix. The fibers can take the form of a unidirectional tape, woven or non-woven cloth or fabric, or a braid.

Therefore, it would be desirable to have a method and apparatus that takes into account at least some of the issues discussed above, as well as other possible issues.

### SUMMARY

An embodiment of the present disclosure provides a method of manufacturing a stiffened composite skin. A dry, hat-shaped preform is applied into a recess in a lower mold tool. A first set of dry, skin-preform layers is applied over the dry, hat-shaped preform to form a dry preform assembly. Resin is infused into the dry preform assembly to form a resin-infused preform. The resin-infused preform is cured *in situ* to form the stiffened composite skin.

Another embodiment of the present disclosure provides a method of manufacturing a stiffened composite skin. A dry preform assembly is laid up, the dry preform assembly comprising a second set of dry, skin-preform layers, a dry, hat-shaped preform with flanges in contact with the second set of dry, skin-preform layers, and a first set of dry, skin-preform layers positioned over and in contact with the dry, hat-shaped preform and the second set of dry, skin-preform layers. The dry preform assembly is infused with resin.

Yet another embodiment of the present disclosure provides a dry preform assembly. The dry preform assembly comprises a second set of dry, skin-preform layers, a dry, hat-shaped preform with flanges in contact with the second set of dry, skin-preform layers, and a first set of dry, skin-preform layers positioned over and in contact with the dry, hat-shaped preform and the second set of dry, skin-preform layers.

A yet further embodiment of the present disclosure provides a dry preform assembly. The dry preform assembly comprises a number of dry, hat-shaped preforms, in which each dry, hat-shaped preform of the number of dry, hat-shaped preforms is semi-rigid and tacked together; and a set of dry, skin-preform layers positioned over and in contact with the dry, hat-shaped preform.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a cross-sectional exploded view of a dry preform assembly in accordance with an illustrative embodiment;
**Figure 4** is an illustration of an isometric view of portions of a dry preform assembly in accordance with an illustrative embodiment;
**Figure 5** is an illustration of a side view of a flange of a hat-shaped stiffener in accordance with an illustrative embodiment;
**Figure 6** is an illustration of a side view of a flange of a hat-shaped stiffener and a dry preform layer in accordance with an illustrative embodiment;
**Figure 7** is an illustration of a side view of a flange of a hat-shaped stiffener and a dry preform layer in accordance with an illustrative embodiment;
**Figures 8A** and **8B** are a flowchart of a method of manufacturing a stiffened composite skin in accordance with an illustrative embodiment;
**Figure 9** is a flowchart of a method of manufacturing a stiffened composite skin in accordance with an illustrative embodiment;
**Figure 10** is an illustration of an aircraft manufacturing and service method in a form of a block diagram in accordance with an illustrative embodiment; and
**Figure 11** is an illustration of an aircraft in a form of a block diagram in which an illustrative embodiment may be implemented.

### DETAILED DESCRIPTION

The illustrative examples recognize and take into account one or more different considerations. For example, the illustrative examples recognize and take into account that existing stiffened composite skins for aircraft primarily use blade stiffeners. The illustrative examples recognize and take into account that to process blade-stiffened composite skins, in-tool or pre-infusion compaction is used to achieve target fiber volumes and associated weight targets in the blade stiffeners.

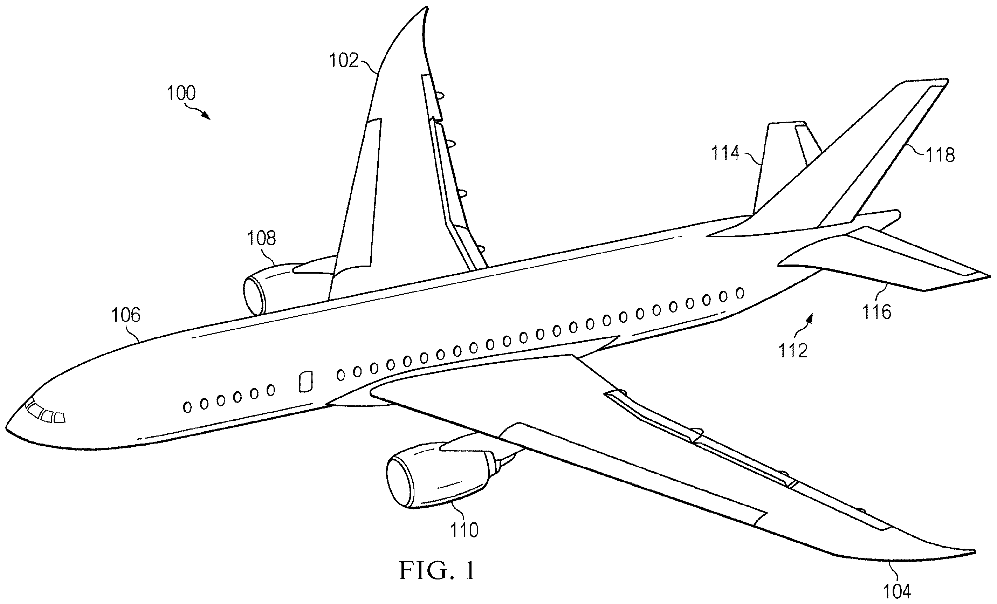

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft having components formed using the methods of the illustrative example. Aircraft **100** is an example of an aircraft having composite components formed with hat-stiffened structures. For example, at least one of body **106,** wing **102,** or wing **104** can have a stiffened composite skin formed with hat stiffeners.

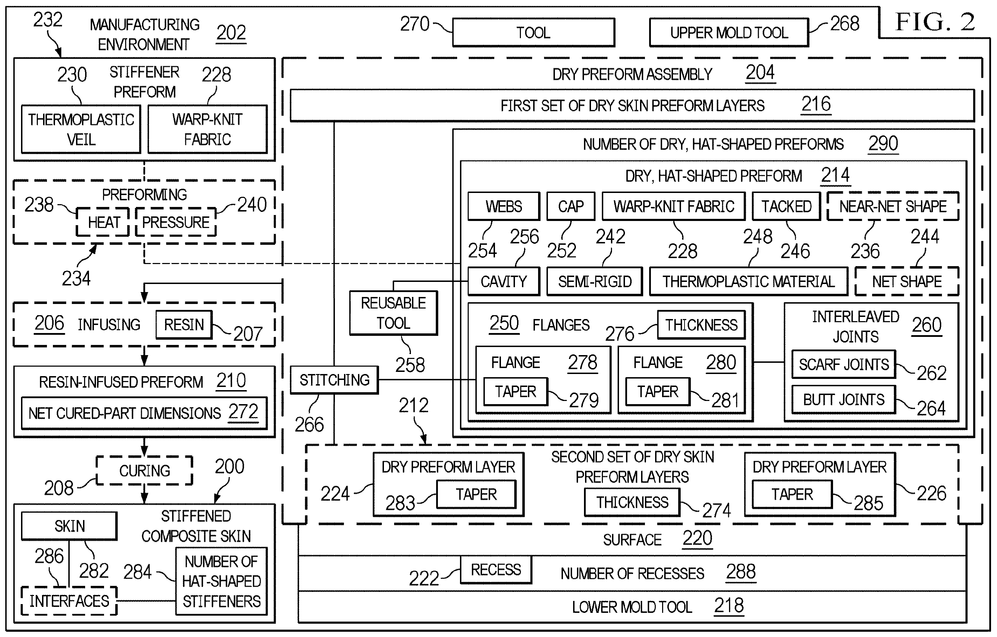

Turning now to **Figure 2****,** an illustration of a block diagram of a manufacturing environment is depicted in accordance with an illustrative embodiment. Stiffened composite skin **200** formed in manufacturing environment **202** can be a portion of aircraft **100,** such as a portion of body **106,** wing **104,** or wing **102.**

Stiffened composite skin **200** is formed by laying up dry preform assembly **204,** infusing **206** resin **207** into dry preform assembly **204,** and then curing **208** resin-infused preform **210** to form stiffened composite skin **200.** In some illustrative examples, dry preform assembly **204** comprises second set of dry, skin-preform layers **212,** dry, hat-shaped preform **214,** and first set of dry, skin-preform layers **216.** As used herein, "a set of" items is one or more items. For example, second set of dry, skin-preform layers **212** comprises one or more dry, skin-preform layers. Second set of dry, skin-preform layers **212** is applied onto lower mold tool **218.** Second set of dry, skin-preform layers **212** is applied to surface **220** of lower mold tool **218.** Dry, hat-shaped preform **214** is applied into recess **222** in lower mold tool **218** and in contact with second set of dry, skin-preform layers **212.**

In this illustrative example, second set of dry, skin-preform layers **212** comprises dry preform layer **224** and dry preform layer **226.** Dry preform layer **224** and dry preform layer **226** are positioned on opposite sides of recess **222** in lower mold tool **218.**

In some illustrative examples, warp-knit fabric **228** containing thermoplastic veil **230** is laid up to form stiffener preform **232.** In some illustrative examples, preforming **234** is performed on stiffener preform **232** to near-net shape **236** to form dry, hat-shaped preform **214.** In some illustrative examples, preforming **234** stiffener preform **232** comprises applying heat **238** and pressure **240** to stiffener preform **232** to tack together warp-knit fabric **228** by activating the thermoplastic veil **230** within warp-knit fabric **228** and to form dry, hat-shaped preform **214** that is semi-rigid **242.**

In some illustrative examples, dry, hat-shaped preform **214** is semi-rigid **242** and tacked **246** together with a thermally activated binder. Thermally activated binder can take any desirable form. In some illustrative examples, thermally activated binder is a number of separate layers in stiffener preform **232.** In some illustrative examples, the thermally activated binder takes the form of thermoplastic material **248** from thermoplastic veil **230.**

In some illustrative examples, dry, hat-shaped preform **214** comprises warp-knit fabric **228.** Dry, hat-shaped preform **214** comprises warp-knit fabric **228** tacked **246** by thermoplastic material **248** softened or partially melted by preforming **234** thermoplastic veil **230** within warp-knit fabric **228.** In some illustrative examples, applying dry, hat-shaped preform **214** into recess **222** comprises forming dry, hat-shaped preform **214** to net shape **244.**

Dry, hat-shaped preform **214** comprises flanges **250** connected to cap **252** by webs **254.** Webs **254** are angled to allow ease of removal of stiffened composite skin **200** from lower mold tool **218.** Webs **254** and cap **252** form cavity **256.** In some illustrative examples, reusable tool **258** is applied inside dry, hat-shaped preform **214.** Reusable tool **258** possesses a geometry of an inside of dry, hat-shaped preform **214.** In this illustrative example, reusable tool **258** possesses a geometry of cavity **256** of dry, hat-shaped preform **214.**

In one illustrative example, reusable tool **258** can take the form of an inflatable polymer-based bladder or the like with features to prevent adhesion/sticking to a respective stiffener after curing **208.** In one illustrative example, reusable tool **258** can take the form of hollow geometry (polymeric or metallic) with an inflatable, removable, reusable bladder inside. In this illustrative example, the hollow geometry can become flyaway tooling.

Reusable tool **258** permits fabrication of hollow stiffening elements with ease of tool removal after curing **208.** By using reusable tool **258,** per-part tooling costs are reduced.

In some illustrative examples, second set of dry, skin-preform layers **212** is optional. In these illustrative examples, interleaved joints **260** are not present. In these illustrative examples, dry preform assembly **204** comprises number of dry, hat-shaped preforms **290** and first set of dry, skin-preform layers **216.** In some of these illustrative examples, dry preform assembly **204** comprises number of dry, hat-shaped preforms **290,** in which each dry, hat-shaped preform **214** of number of dry, hat-shaped preforms **290** is semi-rigid **242** and tacked **246** together; and first set of dry, skin-preform layers **216** positioned over and in contact with number of dry, hat-shaped preforms **290.**

When second set of dry, skin-preform layers **212** is not present, stitching **266** can aid in reducing peel stresses. In some of these illustrative examples, dry preform assembly **204** further comprises stitching **266** connecting flanges **250** of the number of dry, hat-shaped preforms **290** to first set of dry, skin-preform layers **216.**

When second set of dry, skin-preform layers **212** is present, flanges **250** form interleaved joints **260** with second set of dry, skin-preform layers **212** and first set of dry, skin-preform layers **216.** In some illustrative examples, applying dry, hat-shaped preform **214** in contact with second set of dry, skin-preform layers **212** forms scarf joints **262.** In some illustrative examples, applying dry, hat-shaped preform **214** in contact with second set of dry, skin-preform layers **212** forms butt joints **264.**

In some illustrative examples, dry, hat-shaped preform **214** is slightly tapered from a first end to a second end longitudinally to enable easier removal of stiffened composite skin **200** after infusing **206** resin **207** and curing **208.** This taper is present in the longitudinal direction of dry, hat-shaped preform **214.** This longitudinal taper results in the hat-shape cross-sectional shape being slightly smaller at one end of dry, hat-shaped preform **214** than the hat-shape cross-sectional shape at the opposite end. The longitudinal tapering allows for stiffened composite skin **200** to be pulled in the direction of the larger end of the taper and more easily removed from lower mold tool **218.** When stiffened composite skin **200** is removed from lower mold tool **218,** it is pulled both up and towards the direction of the larger end of the taper. When stiffened composite skin **200** is removed from lower mold tool **218,** stiffened composite skin **200** is not only pulled upward away from lower mold tool **218.**

A desirable value for a longitudinal taper will depend on several factors related to stiffened composite skin 200. A desirable value for a longitudinal taper is selected based on at least one of a desired use for stiffened composite skin 200, anticipated stresses on stiffened composite skin 200, type of resin 207, lay up of stiffener preform 232, and other manufacturing considerations or operating considerations for stiffened composite skin 200. A desirable value for a longitudinal taper is chosen to advantageously affect removal of stiffened composite skin 200 without undesirably affecting operation of stiffened composite skin 200. In some illustrative examples, the longitudinal taper can be up to 10% difference between the two ends. In some illustrative examples, the longitudinal taper can be from 0.5% to 10% difference between the two ends. In some illustrative examples, the longitudinal taper can be from 0.5% to 6% difference between the two ends. In some illustrative examples, the longitudinal taper can be from 1% to 6% difference between the two ends. In some illustrative examples, the longitudinal taper can be from 2% to 5% difference between the two ends.

In some illustrative examples, second set of dry, skin-preform layers **212** have a greater thickness, thickness **274,** than thickness **276** than flanges **250** of dry, hat-shaped preform **214.** In these illustrative examples, second set of dry, skin-preform layers **212** is thicker than flanges **250** of dry, hat-shaped preform **214** so that interfaces **286** between number of hat-shaped stiffeners **284** and skin **282** are not at the surface of stiffened composite skin **200.**

In some illustrative examples, tapers of second set of dry, skin-preform layers **212** overlap tapers of dry, hat-shaped preform **214** to position the interfaces in the interior of stiffened composite skin **200.** In one illustrative example, taper **283** of dry preform layer **224** overlaps taper **279** of flange **278** of dry, hat-shaped preform **214** to bury an interface between dry preform layer **224** and flange **278** within skin **282** of stiffened composite skin **200.** Burying the interface in the interior of skin **282** can reduce the peel stresses on the interface. In another illustrative example, taper **285** of dry preform layer **226** overlaps taper **281** of flange **280** of dry, hat-shaped preform **214** to bury an interface between dry preform layer **226** and flange **280** within skin **282** of stiffened composite skin **200.** In these illustrative examples, interfaces **286** between number of hat-shaped stiffeners **284** and skin **282** in stiffened composite skin **200** are buried within skin **282.** When an interface of interfaces **286** is buried within the interior of skin **282,** the flange runout is not exposed on the surface of stiffened composite skin **200.**

In some illustrative examples, to provide additional resistance to peeling, stitching **266** is performed through flanges **250** of dry, hat-shaped preform **214,** second set of dry, skin-preform layers **212,** and first set of dry, skin-preform layers **216.** In some illustrative examples, stitching **266** comprises stitching **266** from a single side of dry preform assembly **204.**

In some illustrative examples, prior to infusing **206** resin **207,** upper mold tool **268** is lowered over dry preform assembly **204** to form a vacuum-sealed perimeter around dry preform assembly **204.** Upper mold tool **268** and lower mold tool **218** form tool **270.** Infusing **206** resin **207** into dry preform assembly **204** comprises infusing **206** resin **207** into tool **270** to fill dry preform assembly **204.**

In some illustrative examples, upper mold tool **268** is closed onto resin-infused preform **210** to encapsulate resin-infused preform **210** to net cured-part dimensions **272** prior to curing **208** resin-infused preform **210.**

After curing **208,** tool **270** is opened by separating upper mold tool **268** and lower mold tool **218** for removal of stiffened composite skin **200** from lower mold tool **218.** In some illustrative examples, stiffened composite skin **200** receives post-processing after removal from lower mold tool **218.** Post-processing can include trimming, drilling, surface treatment, or other desired manufacturing operations.

The illustration of manufacturing environment **202** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment. For example, recess **222** is one of number of recesses **288.** In some illustrative examples, number of recesses **288** includes more than one recess. As another example, dry, hat-shaped preform **214** is one of number of dry, hat-shaped preforms **290.** In some illustrative examples, number of dry, hat-shaped preforms **290** comprises more than one dry, hat-shaped preform. In this illustrative example, second set of dry, skin-preform layers **212** comprises more than two dry, skin-preform layers. In this illustrative example, each dry, hat-shaped preform is in contact with two dry, skin-preforms of second set of dry, skin-preform layers **212.**

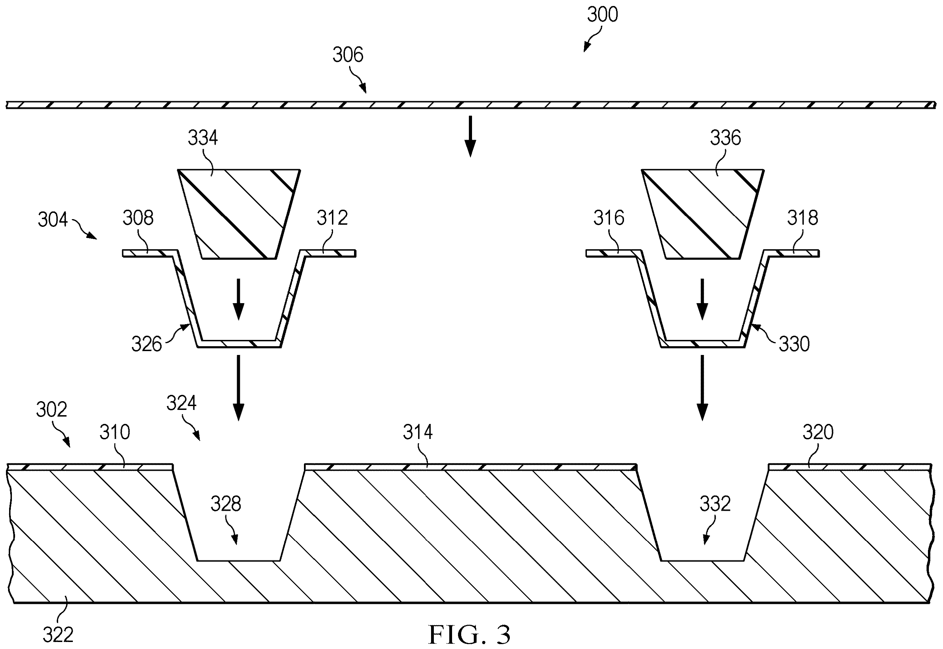

Turning now to **Figure 3****,** an illustration of a cross-sectional exploded view of a dry preform assembly is depicted in accordance with an illustrative embodiment. Dry preform assembly **300** is a physical implementation of dry preform assembly **204** of **Figure 2****.**

Dry preform assembly **300** comprises second set of dry, skin-preform layers **302,** number of dry, hat-shaped preforms **304,** and first set of dry, skin-preform layers **306.** Number of dry, hat-shaped preforms **304** have flanges configured to contact second set of dry, skin-preform layers **302.** In an assembled state, flange **308** is in contact with dry, skin-preform layer **310.** In an assembled state, flange **312** is in contact with dry, skin-preform layer **314.** In an assembled state, flange **316** is in contact with dry, skin-preform layer **314.** In an assembled state, flange **318** is in contact with dry, skin-preform layer **320.**

First set of dry, skin-preform layers **306** is positioned over number of dry, hat-shaped preforms **304** and second set of dry, skin-preform layers **302.** When assembled, first set of dry, skin-preform layers **306** is in contact with number of dry, hat-shaped preforms **304** and second set of dry, skin-preform layers **302.**

Second set of dry, skin-preform layers **302** is applied onto lower mold tool **322.** Number of dry, hat-shaped preforms **304** is applied into number of recesses **324** in lower mold tool **322** and in contact with second set of dry, skin-preform layers **302.** To form dry preform assembly **300,** dry, hat-shaped preform **326** of number of dry, hat-shaped preforms **304** is applied into recess **328** of number of recesses **324.** To form dry preform assembly, dry, hat-shaped preform **330** of number of dry, hat-shaped preforms **304** is applied into recess **332** of number of recesses **324.**

Reusable tool **334** is applied inside dry, hat-shaped preform **326.** Reusable tool **334** possesses a geometry of an inside of dry, hat-shaped preform **326.** Reusable tool **334** maintains geometry of dry, hat-shaped preform **326** during resin infusion and curing of dry preform assembly **300.**

Reusable tool **336** is applied inside dry, hat-shaped preform **330.** Reusable tool **336** possesses a geometry of an inside of dry, hat-shaped preform **330.** Reusable tool **336** maintains geometry of dry, hat-shaped preform **330** during resin infusion and curing of dry preform assembly **300.**

After applying first set of dry, skin-preform layers **306** over and in contact with number of dry, hat-shaped preforms **304** and second set of dry, skin-preform layers **302** to form dry preform assembly **300,** resin is infused into dry preform assembly **300** to form a resin-infused preform. The resin-infused preform is cured *in situ* to form a stiffened composite skin.

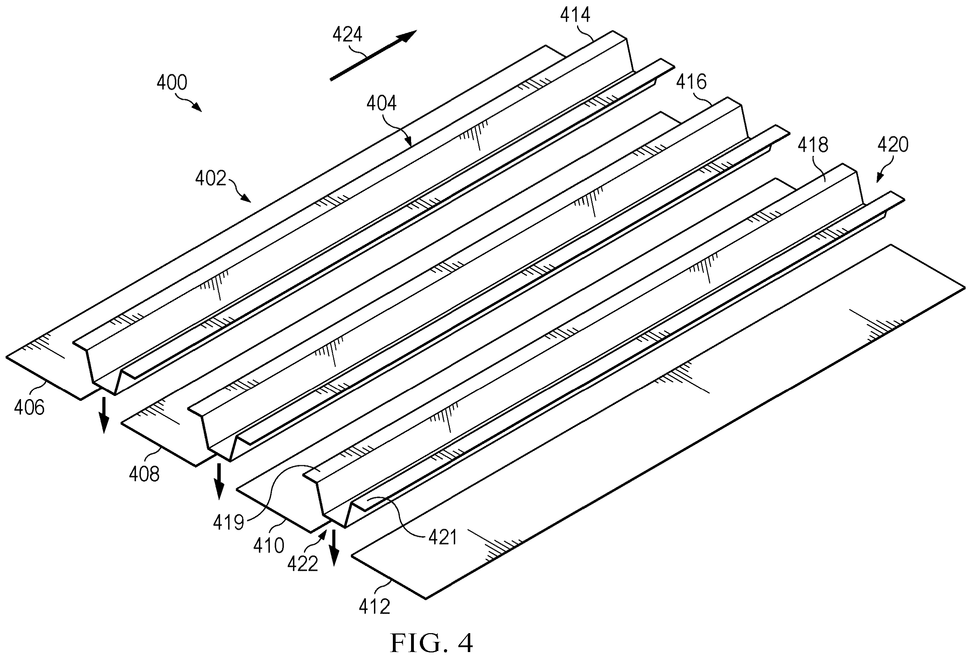

Turning now to **Figure 4****,** an illustration of an isometric view of portions of a dry preform assembly is depicted in accordance with an illustrative embodiment. Body **106,** wing **104,** or wing **102** could be formed using number of dry, hat-shaped preforms **400** and second set of dry, skin-preforms **402** of **Figure 4****.** Number of dry, hat-shaped preforms **400** are a physical implementation of number of dry, hat-shaped preforms **290** of **Figure 2****.** second set of dry, skin-preforms **402** are a physical implementation of second set of dry, skin-preform layers **212** of **Figure 2****.**

Number of dry, hat-shaped preforms **400** include dry, hat-shaped preform **404,** dry, hat-shaped preform **406,** and dry, hat-shaped preform **408.** Each of number of dry, hat-shaped preforms **400** will be infused with resin to form stiffeners for a supported composite skin formed in part by second set of dry, skin-preforms **402.**

Second set of dry, skin-preforms **402** comprises dry skin preform **410,** dry skin preform **412,** dry skin preform **414,** and dry skin preform **416.** Each of second set of dry, skin-preforms **402** will be infused with resin to form portions of a composite skin stiffened by hat-shaped stiffeners.

Number of dry, hat-shaped preforms **400** and second set of dry, skin-preforms **402** are infused with resin as part of a dry preform assembly (not depicted). Dry, hat-shaped preform **404** has flange **419** to be placed over and in contact with dry skin preform **410** to form a joint (not depicted). Dry, hat-shaped preform **404** has flange **421** to be placed over and in contact with dry skin preform **412** to form a joint (not depicted).

In some illustrative examples, number of dry, hat-shaped preforms **400** is longitudinally tapered. For example, dry, hat-shaped preform **418** is tapered from end **420** to end **422.** In this illustrative example, hat-shaped preform **418** is larger at end **420** and smaller at end **422.** By dry, hat-shaped preform **418** being longitudinally tapered, a resulting stiffened composite structure can be removed from a lower mold tool more easily by lifting and pulling in direction **424.**

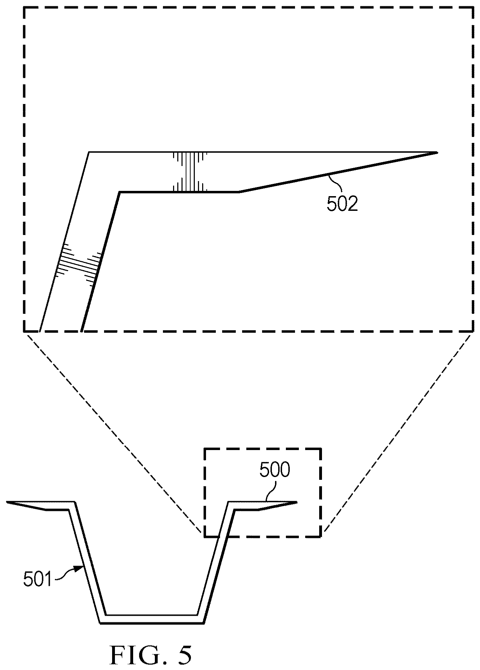

Turning now to **Figure 5****,** an illustration of a side view of a flange of a hat-shaped stiffener is depicted in accordance with an illustrative embodiment. Flange **500** can be present in a composite skin of one of body **106,** wing **104,** or wing **102** of aircraft **100** of **Figure 1****.** Flange **500** is a physical implementation of one of flanges **250** of **Figure 2****.** Flange **500** of dry, hat-shaped preform **501** can be a portion of one of number of dry, hat-shaped preforms **304** of **Figure 3****.** Flange **500** can be a portion of one of number of dry, hat-shaped preforms **400** of **Figure 4****.**

Flange **500** comprises taper **502.** Taper **502** is formed by termination of plies of flange **500.** Taper **502** can take the form of a series of steps. In some illustrative examples, taper **502** can be cut or machined at an angle. In some illustrative examples, taper **502** can be built in a stepped design. In some illustrative examples, taper **502** is configured to produce a scarf joint with a taper of a first dry skin preform.

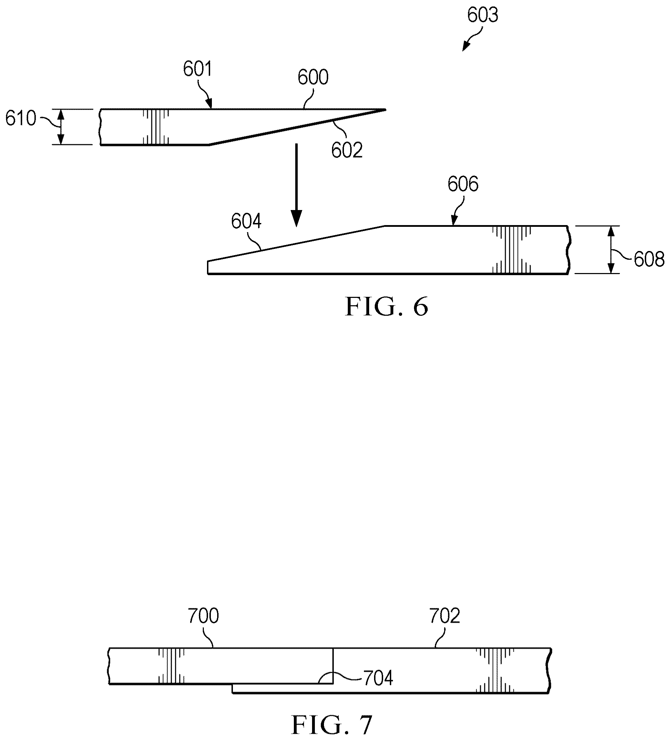

Turning now to **Figure 6****,** an illustration of a side view of a flange of a hat-shaped stiffener and a dry preform layer is depicted in accordance with an illustrative embodiment. Flange **600** can be present in a composite skin of one of body **106,** wing **104,** or wing **102** of aircraft **100** of **Figure 1****.** Flange **600** is a physical implementation of one of flanges **250** of **Figure 2****.** Flange **600** of dry, hat-shaped preform **601** can be a portion of one of number of dry, hat-shaped preforms **304** of **Figure 3****.** Flange **600** can be a portion of one of number of dry, hat-shaped preforms **400** of **Figure 4****.** In some illustrative examples, flange **600** is the same as flange **500.**

In view **603,** flange **600** has taper **602.** Taper **602** of flange **600** is positioned above taper **604** of dry, skin-preform layer **606.** As depicted, dry, skin-preform layer **606** has thickness **608** greater than thickness **610** of flange **600.** By thickness **608** being greater than thickness **610** of flange **600,** a joint formed at the interface of taper **602** and taper **604** is not at a surface of the resulting stiffened composite skin. By taper **604** overlapping taper **602** of flange **600** in an interior of the resulting stiffened composite skin, the flange runout is not exposed on a surface. Taper **604** overlapping taper **602** of flange **600** reduces peel stresses to the resulting interface. In this illustrative example, taper **604** and taper **602** will form a scarf joint.

Turning now to **Figure 7****,** an illustration of a side view of a flange of a hat-shaped stiffener and a dry preform layer is depicted in accordance with an illustrative embodiment. Flange **700** can be present in a composite skin of one of body **106,** wing **104,** or wing **102** of aircraft **100** of **Figure 1****.** Flange **700** is a physical implementation of one of flanges **250** of **Figure 2****.** Flange **700** can be a portion of one of number of dry, hat-shaped preforms **304** of **Figure 3****.** Flange **700** of dry, hat-shaped preform **701** of **Figure 7** can be a portion of one of number of dry, hat-shaped preforms **400** of **Figure 4****.** In some illustrative examples, flange **700** is the same as flange **500.**

Flange **700** and dry, skin-preform layer **702** form butt-joint **704.** Flange **700** does not include a taper in this illustrative example.

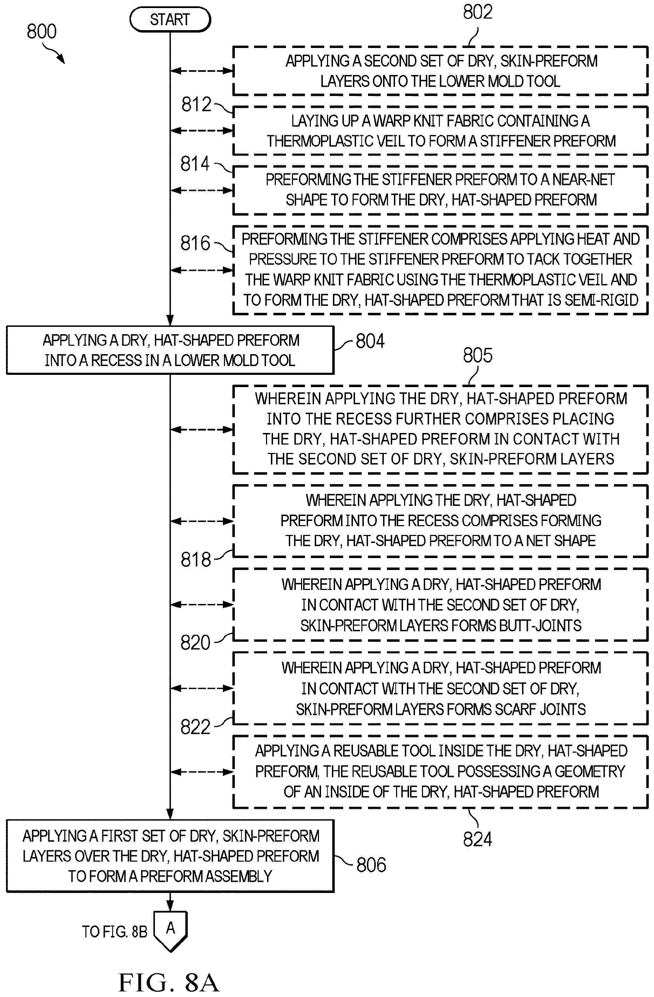

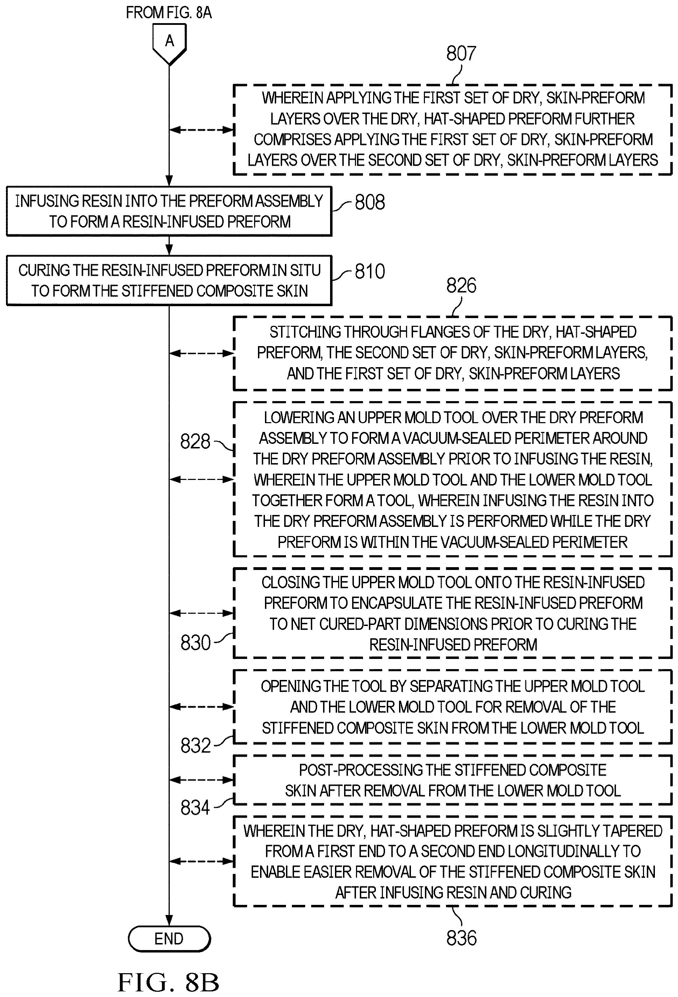

Turning now to **Figures 8A** and **8B****,** a flowchart of a method of manufacturing a stiffened composite skin is depicted in accordance with an illustrative embodiment. Method **800** can be used to form a stiffened composite skin for at least one of body **106,** wing **104,** or wing **102** of **Figure 1****.** Dry preform assembly **204** of **Figure 2** can be assembled and processed using method **800.** Dry preform assembly **300** of **Figure 3** can be assembled and processed using method **800.** Method **800** can be performed using number of dry, hat-shaped preforms **400** and second set of dry, skin-preforms **402** of **Figure 4****.** Method **800** can be performed using flange **500** of **Figure 5****.** Method **800** can be performed using dry, hat-shaped preform **601** and dry skin preform layer **606** of **Figure 6****.** Method **800** can be performed using dry, hat-shaped preform **701** and dry, skin-preform layer **702** of **Figure 7****.**

Method **800** applies a dry, hat-shaped preform into a recess in a lower mold tool (operation **804).**

Method **800** applies a first set of dry, skin-preform layers over the dry, hat-shaped preform to form a dry preform assembly (operation **806).** Method **800** infuses resin into the dry preform assembly to form a resin-infused preform (operation **808).** Method **800** cures the resin-infused preform *in situ* to form the stiffened composite skin (operation **810).** Afterwards, method **800** terminates.

In some illustrative examples, method **800** applies a second set of dry, skin-preform layers onto the lower mold tool (operation **802).** In some illustrative examples, applying the dry, hat-shaped preform into the recess further comprises placing the dry, hat-shaped preform in contact with the second set of dry, skin-preform layers (operation **805).** In some illustrative examples, applying the first set of dry, skin-preform layers over the dry, hat-shaped preform further comprises applying the first set of dry, skin-preform layers over the second set of dry, skin-preform layers (operation **807).**

In some illustrative examples, method **800** lowers an upper mold tool over the dry preform assembly to form a vacuum-sealed perimeter around the dry preform assembly prior to infusing the resin, wherein infusing the resin into the dry preform assembly is performed while the dry preform assembly is within the vacuum-sealed perimeter (operation **828).** In some illustrative examples, method **800** closes the upper mold tool onto the resin-infused preform to encapsulate the resin-infused preform to net cured-part dimensions prior to curing the resin-infused preform (operation **830).**

In some illustrative examples, method **800** opens the tool by separating the upper mold tool and the lower mold tool for removal of the stiffened composite skin from the lower mold tool (operation **832).** In some illustrative examples, method **800** post-processes the stiffened composite skin after removal from the lower mold tool (operation **834).** In some illustrative examples, method **800** applies a reusable tool inside the dry, hat-shaped preform, the reusable tool possessing a geometry of an inside of the dry, hat-shaped preform (operation **824).** In some illustrative examples, method **800** lays-up a warp-knit fabric containing a thermoplastic veil to form a stiffener preform (operation **812).**

In some illustrative examples, method **800** preforms the stiffener preform to a near-net shape to form the dry, hat-shaped preform (operation **814).**

In some illustrative examples, preforming the stiffener preform comprises applying heat and pressure to the stiffener preform to tack together the warp-knit fabric using the thermoplastic veil and to form the dry, hat-shaped preform that is semi-rigid (operation **816).** By applying heat and pressure, the thermoplastic veil is at least partially softened to tack the warp-knit fabric.

In some illustrative examples, applying the dry, hat-shaped preform into the recess comprises forming the dry, hat-shaped preform to a net shape (operation **818).**

In some illustrative examples, the dry, hat-shaped preform is slightly tapered from a first end to a second end longitudinally to enable easier removal of the stiffened composite skin after infusing resin and curing (operation **836).** In these illustrative examples, removal of the stiffened composite skin is easier as the stiffened composite skin can be pulled in the direction of the smaller end of the taper.

In some illustrative examples, applying a dry, hat-shaped preform in contact with the second set of dry, skin-preform layers forms scarf joints (operation **822).** In some illustrative examples, applying a dry, hat-shaped preform in contact with the second set of dry, skin-preform layers forms butt joints (operation **820).**

In some illustrative examples, method **800** further comprises stitching through flanges of the dry, hat-shaped preform, the second set of dry, skin-preform layers, and the first set of dry, skin-preform layers (operation **826).** In these illustrative examples, stitching provides additional resistance to peeling.

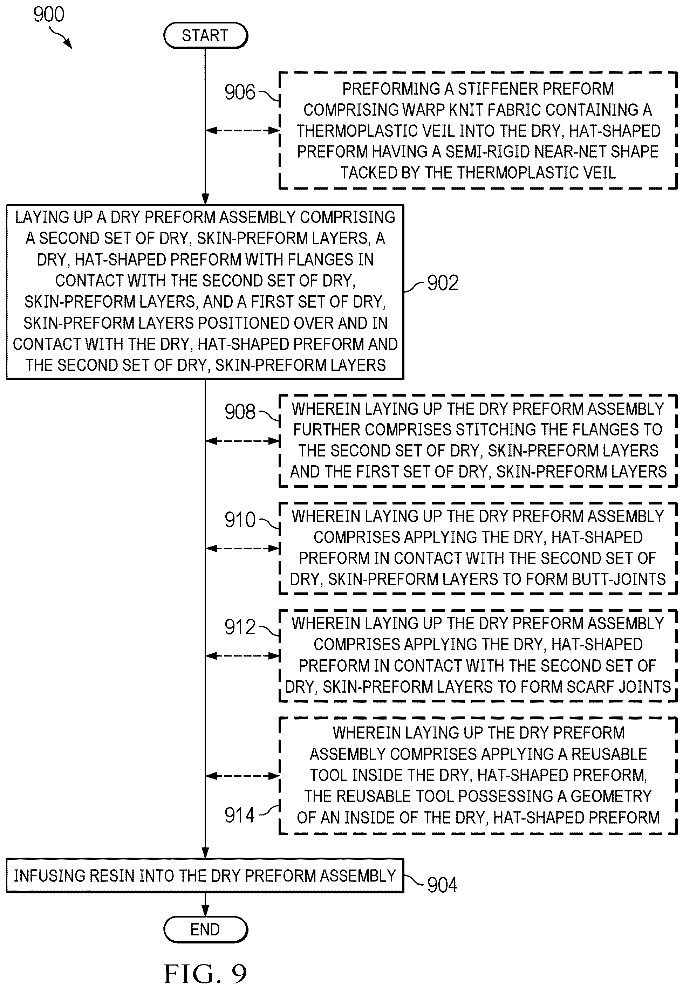

Turning now to **Figure 9****,** a flowchart of a method of manufacturing a stiffened composite skin is depicted in accordance with an illustrative embodiment. Method **900** can be used to form a stiffened composite skin for at least one of body **106,** wing **104,** or wing **102** of **Figure 1****.** Dry preform assembly **204** of **Figure 2** can be assembled and processed using method **900.** Dry preform assembly **300** of **Figure 3** can be assembled and processed using method **900.** Method **900** can be performed using number of dry, hat-shaped preforms **400** and second set of dry, skin-preforms **402** of **Figure 4****.** Method **900** can be performed using flange **500** of **Figure 5****.** Method **900** can be performed using dry, hat-shaped preform **601** and dry, skin-preform layer **606** of **Figure 6****.** Method **900** can be performed using dry, hat-shaped preform **701** and dry, skin-preform layer **702** of **Figure 7****.**

Method **900** lays up a dry preform assembly comprising a second set of dry, skin-preform layers, a dry, hat-shaped preform with flanges in contact with the second set of dry, skin-preform layers, and a first set of dry, skin-preform layers positioned over and in contact with the dry, hat-shaped preform and the second set of dry, skin-preform layers (operation **902).** Method **900** infuses resin into the dry preform assembly (operation **904).** Afterwards, method **900** terminates.

In some illustrative examples, method **900** preforms a stiffener preform comprising warp-knit fabric with a thermoplastic veil into the dry, hat-shaped preform having a semi-rigid near-net shape tacked by the thermoplastic veil (operation **906).** In some illustrative examples, laying up the dry preform assembly further comprises stitching the flanges to the second set of dry, skin-preform layers and the first set of dry, skin-preform layers (operation **908).**

In some illustrative examples, laying up the dry preform assembly comprises applying the dry, hat-shaped preform in contact with the second set of dry, skin-preform layers to form butt joints (operation **910).** In some illustrative examples, laying up the dry preform assembly comprises applying the dry, hat-shaped preform in contact with the second set of dry, skin-preform layers to form scarf joints (operation **912).** In some illustrative examples, laying up the dry preform assembly comprises applying a reusable tool inside the dry, hat-shaped preform, the reusable tool possessing a geometry of an inside of the dry, hat-shaped preform (operation **914).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operations **802, 805, 807** and **812** through operation **836** may be optional. For example, operation **906** through operation **914** may be optional.

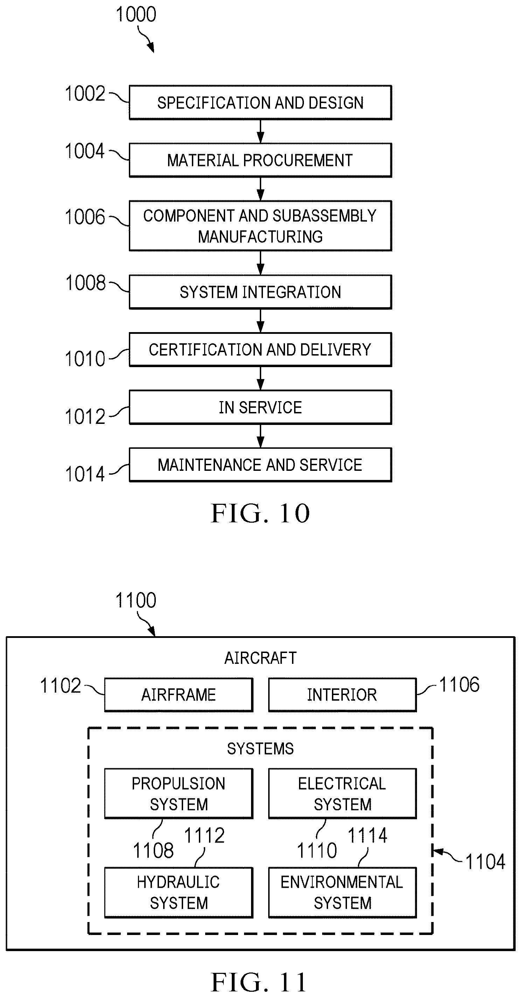

Illustrative embodiments of the present disclosure may be described in the context of aircraft manufacturing and service method **1000** as shown in **Figure 10** and aircraft **1100** as shown in **Figure 11****.** Turning first to **Figure 10****,** an illustration of an aircraft manufacturing and service method in a form of a block diagram is depicted in accordance with an illustrative embodiment. During pre-production, aircraft manufacturing and service method **1000** may include specification and design **1002** of aircraft **1100** in **Figure 11** and material procurement **1004.**

During production, component and subassembly manufacturing **1006** and system integration **1008** of aircraft **1100** takes place. Thereafter, aircraft **1100** may go through certification and delivery **1010** in order to be placed in service **1012.** While in service **1012** by a customer, aircraft **1100** is scheduled for routine maintenance and service **1014,** which may include modification, reconfiguration, refurbishment, or other maintenance and service.

Each of the processes of aircraft manufacturing and service method **1000** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 11****,** an illustration of an aircraft in a form of a block diagram is depicted in which an illustrative embodiment may be implemented. In this example, aircraft **1100** is produced by aircraft manufacturing and service method **1000** of **Figure 10** and may include airframe **1102** with plurality of systems **1104** and interior **1106.** Examples of systems **1104** include one or more of propulsion system **1108,** electrical system **1110,** hydraulic system **1112,** and environmental system **1114.** Any number of other systems may be included.

Apparatuses and methods embodied herein may be employed during at least one of the stages of aircraft manufacturing and service method **1000.** One or more illustrative embodiments may be manufactured or used during at least one of component and subassembly manufacturing **1006,** system integration **1008,** in service **1012,** or maintenance and service **1014** of **Figure 10****.**

A portion of airframe **1102** of aircraft **1100** can be formed by one of method **800** or method **900.** At least one of method **800** or method **900** can be performed during component and subassembly manufacturing **1006.** A composite structure formed using one of method **800** or method **900** can be present and utilized during in service **1012.** At least one of method **800** or method **900** can be performed during maintenance and service **1014** to form a replacement part.

The illustrative examples present fabrication of large, hat-stiffened structures, such as for aircraft wings. The illustrative examples provide robust provisions for tool reusability and for flange interleaving. The illustrative examples utilize dry preforms, optional interleaving, reusable removable tooling, and resin infusion to enable the fabrication of hollow stiffening elements like hat stringers. The illustrative examples provide for ease of removal of the cured part from the tool, robust stiffener/skin joints, rapid removal of tooling from the hollow elements, and a fully integrated structure.

A goal of the illustrative examples is to avoid separate stringer tooling for either transportation or resin infusion of the dry, hat-shaped preform. The dry, hat-shaped preform is not resin-infused prior to placement in a recess in a lower mold tool. The dry, hat-shaped preform is not fully consolidated prior to placement. The dry, hat-shaped preform can be moved by hand due to the semi-rigid nature of the dry, hat-shaped preform. In the illustrative examples, stiffeners are slightly tapered from root (thick end of part) to tip (thinner end of part) to ease part removal after curing. In some illustrative examples, stiffener details are preheat-set or otherwise formed to stable shape for ease of handling. Stiffener details are self-locating in tool.

The illustrative examples use near-net-shaped hat preforms that are loaded into a female mold tool. The illustrative examples interleave the flange with skin detail to reduce/avoid peel loads. The illustrative examples cover the hat preforms and skin detail with base skin plies and then infuse the assembly with a resin using a closed mold or a tooled bag side over the aero surface. Parts are cured *in situ* in the tool and can be post-processed, as needed. In some illustrative examples, the flanges are stitched to the skin to increase damage tolerance.

In the illustrative examples, the skin taper overlaps the flange taper to bury the interface in the interior of the skin so that the flange runout is not exposed on the surface. Burying the interface in the interior of the skin can cause the interface to not be prone to peel stresses. In some illustrative examples, the skin detail is thicker than stringer flange so that stiffener/skin interface is not at the part surface.

The illustrative examples provide for ease of removal of large parts with stiffening elements from tooling. The illustrative examples remove / reduce the use of offline preform compaction of stiffening elements.

The use of hat stiffeners instead of blade stiffeners allows for elimination of pre-infusion or in-tool blade compaction. The illustrative examples are potentially lighter in weight due to use of hats vs. blades for stiffening.

The use of hat stiffeners enables easier part removal from tool after curing. In some illustrative examples, a slight taper in width of hat stiffeners along length allows for easier part removal. In some illustrative examples, tapered stiffening elements ease part removal from tool. The illustrative examples provide for ease of part removal from tool after curing by avoidance of features that could cause part to be trapped in tooling.

In some illustrative examples, the hat stiffeners made using reusable, removable bladders. In some illustrative examples, hollow stiffening elements made using reusable tooling are utilized in resin infusing the hat stiffeners.

The illustrative examples mitigate peel loads at ends of the hat shaped stiffener flanges through interleaving. Interleaving of the hat stiffener flanges minimizes stresses and redistributes peel loads that could cause stiffener/skin debonding. In some illustrative examples, the interleaved flanges within skin laminate are below part surface.

The illustrative examples use near-net-shape, dry preform fabrics. The illustrative examples use resin infusion to produce composite from preform. The illustrative examples use resin infusion to allow for integration of stiffening elements using dry fabric, which is simpler than doing so with prepreg or via secondary attachment, such as co-bond, co-cure, or secondary bonding.

The illustrative examples provide a combination of at least one of hat stiffeners, flange interleaving, reusable tooling for hollow elements, and resin infusion to produce a single-piece, integrated structure suitable for aerospace structures like wings, etc., with easy part removal from tool after curing. The illustrative examples recognize and take into account that using hat shaped stiffeners can result in a thicker gauge skin geometry. The illustrative examples recognize and take into account that blade stringers would provide simpler tooling than for hat-shaped stiffeners.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Also disclosed herein are the following numbered clauses:
1. A method of manufacturing a stiffened composite skin comprising:
   laying up a dry preform assembly comprising a second set of dry, skin-preform layers, a dry, hat-shaped preform with flanges in contact with the second set of dry, skin-preform layers, and a first set of dry, skin-preform layers positioned over and in contact with the dry, hat-shaped preform and the second set of dry, skin-preform layers; and
   infusing) resin into the dry preform assembly.
2. The method of clause 1, wherein laying up the dry preform assembly comprises applying the dry, hat-shaped preform in contact with the second set of dry, skin-preform layers to form scarf joints.
3. The method of clause 1 or 2, wherein laying up the dry preform assembly comprises applying the dry, hat-shaped preform in contact with the second set of dry, skin-preform layers to form butt joints.
4. The method of any preceding clause further comprising:
   preforming a stiffener preform comprising warp-knit fabric with a thermoplastic veil into the dry, hat-shaped preform having a semi-rigid near-net shape tacked by the thermoplastic veil.
5. The method of any preceding clause, wherein laying up the dry preform assembly comprises applying a reusable tool inside the dry, hat-shaped preform, the reusable tool possessing a geometry of an inside of the dry, hat-shaped preform.
6. The method of any preceding clause, wherein laying up the dry preform assembly further comprises stitching the flanges to the second set of dry, skin-preform layers and the first set of dry, skin-preform layers.
7. A dry preform assembly comprising:
   a second set of dry, skin-preform layers;
   a dry, hat-shaped preform (214) with flanges in contact with the second set of dry, skin-preform layers; and
   a first set of dry, skin-preform layers positioned over and in contact with the dry, hat-shaped preform and the second set of dry, skin-preform layers.
8. The dry preform assembly of clause 7, wherein the second set of dry, skin-preform layers have a greater thickness than a thickness than the flanges of the dry, hat-shaped preform.
9. The dry preform assembly of clause 7 or 8, wherein the flanges are stitched to the second set of dry, skin-preform layers and the first set of dry, skin-preform layers.
10. The dry preform assembly of any of clauses 7 to 9, wherein the dry, hat-shaped preform and the second set of dry, skin-preform layers form interleaved joints.
11. The dry preform assembly of any of clauses 7 to 10, wherein the dry, hat-shaped preform and the second set of dry, skin-preform layers form butt joints.
12. The dry preform assembly of any of clauses 7 to 11, wherein the dry, hat-shaped preform is semi-rigid and tacked together with a thermoplastic veil.
13. The dry preform assembly of any of clauses 7 to 12, wherein the dry, hat-shaped preform is semi-rigid (242) and tacked together with a thermally activated binder.
14. The dry preform assembly of any of clauses 7 to 13, wherein the dry, hat-shaped preform comprises warp-knit fabric.
15. A dry preform assembly comprising:
   a number of dry, hat-shaped preforms, in which each dry, hat-shaped preform of the number of dry, hat-shaped preforms is semi-rigid and tacked together; and
   a first set of dry, skin-preform layers positioned over and in contact with the number of dry, hat-shaped preforms.
16. The dry preform assembly of clause 15 further comprising stitching connecting flanges of the number of dry, hat-shaped preforms to the first set of dry, skin-preform layers.
17. A method of manufacturing a stiffened composite skin comprising:
   applying a dry, hat-shaped preform into a recess in a lower mold tool;
   applying a first set of dry, skin-preform layers over the dry, hat-shaped preform to form a dry preform assembly;
   infusing resin into the dry preform assembly to form a resin-infused preform; and
   curing the resin-infused preform *in situ* to form the stiffened composite skin.
18. The method of clause 17 further comprising:
   lowering an upper mold tool over the dry preform assembly to form a vacuum-sealed perimeter around the dry preform assembly prior to infusing the resin, wherein the upper mold tool and the lower mold tool together form a tool, and wherein infusing the resin into the dry preform assembly is performed while the dry preform assembly is within the vacuum-sealed perimeter.
19. The method of clause 18 further comprising:
   closing the upper mold tool onto the resin-infused preform to encapsulate the resin-infused preform to net cured-part dimensions prior to curing the resin-infused preform.
20. The method of clause 18 or 19 further comprising:
   opening the tool by separating the upper mold tool and the lower mold tool for removal of the stiffened composite skin from the lower mold tool; and
   post-processing the stiffened composite skin after removal from the lower mold tool.
21. The method of any of clauses 17 to 20 further comprising:
   applying a reusable tool inside the dry, hat-shaped preform, the reusable tool possessing a geometry of an inside of the dry, hat-shaped preform.
22. The method of any of clauses 17 to 21 further comprising:
   laying up a warp-knit fabric containing a thermoplastic veil to form a stiffener preform.
23. The method of clause 22 further comprising:
   preforming the stiffener preform to a near-net shape to form the dry, hat-shaped preform.
24. The method of clauses 23, wherein:
   preforming the stiffener preform comprises applying heat and pressure to the stiffener preform to tack together the warp-knit fabric using the thermoplastic veil and to form the dry, hat-shaped preform that is semi-rigid.
25. The method of any of clauses 17 to 24, wherein applying the dry, hat-shaped preform into the recess comprises forming the dry, hat-shaped preform to a net shape.
26. The method of any of clauses 17 to 25, wherein the dry, hat-shaped preform is slightly tapered from a first end to a second end longitudinally to enable easier removal of the stiffened composite skin after infusing resin and curing.
27. The method of any of clauses 17 to 26 further comprising:
   applying a second set of dry, skin-preform layers onto the lower mold tool;
   wherein applying the dry, hat-shaped preform into the recess further comprises placing the dry, hat-shaped preform in contact with the second set of dry, skin-preform layers; and
   wherein applying the first set of dry, skin-preform layers over the dry, hat-shaped preform further comprises applying the first set of dry, skin-preform layers over the second set of dry, skin-preform layers.
28. The method of clause 27, wherein applying a dry, hat-shaped preform in contact with the second set of dry, skin-preform layers forms scarf joints.
29. The method of clause 27, wherein applying a dry, hat-shaped preform in contact with the second set of dry, skin-preform layers forms butt joints.
30. The method of any of clauses 17 to 29 further comprising:
   stitching through flanges of the dry, hat-shaped preform, the second set of dry, skin-preform layers, and the first set of dry, skin-preform layers.

## Claims

1. A method of manufacturing a stiffened composite skin comprising:
laying up a dry preform assembly comprising a second set of dry, skin-preform layers, a dry, hat-shaped preform with flanges in contact with the second set of dry, skin-preform layers, and a first set of dry, skin-preform layers positioned over and in contact with the dry, hat-shaped preform and the second set of dry, skin-preform layers; and
infusing resin into the dry preform assembly.

2. The method of claim 1, wherein laying up the dry preform assembly comprises applying the dry, hat-shaped preform in contact with the second set of dry, skin-preform layers to form scarf joints.

3. The method of claim 1 or 2, wherein laying up the dry preform assembly comprises applying the dry, hat-shaped preform in contact with the second set of dry, skin-preform layers to form butt joints.

4. The method of any preceding claim further comprising:
preforming a stiffener preform comprising warp-knit fabric with a thermoplastic veil into the dry, hat-shaped preform having a semi-rigid near-net shape tacked by the thermoplastic veil.

5. The method of any preceding claim, wherein laying up the dry preform assembly comprises applying a reusable tool inside the dry, hat-shaped preform, the reusable tool possessing a geometry of an inside of the dry, hat-shaped preform.

6. The method of any preceding claim, wherein laying up the dry preform assembly further comprises stitching the flanges to the second set of dry, skin-preform layers and the first set of dry, skin-preform layers.

7. A dry preform assembly comprising:
a second set of dry, skin-preform layers;
a dry, hat-shaped preform (214) with flanges in contact with the second set of dry, skin-preform layers; and
a first set of dry, skin-preform layers positioned over and in contact with the dry, hat-shaped preform and the second set of dry, skin-preform layers.

8. The dry preform assembly of claim 7, wherein the second set of dry, skin-preform layers have a greater thickness than a thickness than the flanges of the dry, hat-shaped preform.

9. The dry preform assembly of claim 7 or 8, wherein the flanges are stitched to the second set of dry, skin-preform layers and the first set of dry, skin-preform layers.

10. The dry preform assembly of any of claims 7 to 9, wherein the dry, hat-shaped preform and the second set of dry, skin-preform layers form interleaved joints.

11. The dry preform assembly of any of claims 7 to 10, wherein the dry, hat-shaped preform and the second set of dry, skin-preform layers form butt joints.

12. The dry preform assembly of any of claims 7 to 11, wherein the dry, hat-shaped preform is semi-rigid and tacked together with a thermoplastic veil.

13. The dry preform assembly of any of claims 7 to 12, wherein the dry, hat-shaped preform is semi-rigid (242) and tacked together with a thermally activated binder.

14. The dry preform assembly of any of claims 7 to 13, wherein the dry, hat-shaped preform comprises warp-knit fabric.

15. A dry preform assembly comprising:
a number of dry, hat-shaped preforms, in which each dry, hat-shaped preform of the number of dry, hat-shaped preforms is semi-rigid and tacked together; and
a first set of dry, skin-preform layers positioned over and in contact with the number of dry, hat-shaped preforms.
